# FASCICULE DE BREVET EUROPEEN

(11) **EP 4 666 985 B1**
(45) Date de publication et mention de la délivrance du brevet: **02.09.2026**
(21) Numéro de dépôt: 25183463.6
(22) Date de dépôt: 17.06.2025
(51) Int. Cl.: A61C 15/04

(54) **BROSSE INTERDENTAIRE MOTORISÉE**
MOTORISIERTE INTERDENTALE BÜRSTE
MOTORIZED INTERDENTAL BRUSH

(30) Priorité: 17.06.2024 FR 2406436
(43) Date de publication de la demande: 24.12.2025
(73) Titulaire: Nguyen, Hoang Son, 93140 Bondy (FR)
(72) Inventeur: Nguyen, Hoang Son, 93140 Bondy (FR)
(74) Mandataire: IP Trust

(56) Documents cités:
- WO-A1-2006/041116
- JP-A- 2002 045 379
- JP-B2- 3 434 275
- KR-A- 20190 001 249

## Description

### DOMAINE DE L'INVENTION

La présente invention concerne le domaine des brosses interdentaires.

Une brosse interdentaire est un outil d'hygiène bucco-dentaire utilisé pour nettoyer les espaces entre les dents, là où une brosse à dents classique ne peut pas accéder efficacement.

Elle est composée d'un manche et d'une petite brosse cylindrique ou conique montée sur une tige métallique ou une tige en plastique. Les poils de la brosse peuvent être en nylon ou en silicone.

Une brosse interdentaire est conçue pour enlever la plaque dentaire et les débris alimentaires entre les dents, réduisant ainsi le risque de caries et de maladies des gencives comme la gingivite et la parodontite.

Il existe différentes tailles de brosses interdentaires. Il est important de choisir la taille qui s'adapte bien à l'espace entre les dents.

La brosse interdentaire est délicatement insérée entre les dents sans forcer. La brosse est animée d'un mouvement de va-et-vient pour nettoyer les deux côtés de l'espace interdentaire. Elle est souvent plus efficace que le fil dentaire pour les espaces plus larges entre les dents.

Prévention des maladies bucco-dentaires : En nettoyant efficacement les espaces interdentaires, elle aide à prévenir les problèmes de gencives et les caries interproximales.

### ARRIERE PLAN TECHNOLOGIQUE DE L'INVENTION

On connaît le brevet US7441297B2 qui propose une solution de brosse interdentaire motorisée comprenant une brosse incluant au moins un fil muni de filaments disposés sur ce fil pour insertion et engagement dans un espace interdentaire entre les dents de l'utilisateur, et un gabarit situé à l'extrémité libre dudit fil et ayant un diamètre extérieur sensiblement égal à celui des filaments pour limiter l'insertion et l'engagement du fil et des filaments dans un espace interdentaire prédéterminé entre les dents de l'utilisateur et pour empêcher les filaments de s'insérer et de s'engager dans un espace interdentaire de largeur relativement plus petite et pour éviter que les gencives de l'utilisateur ne soient blessées ou endommagées par les filaments, et un moyen permettant de faire bouger la brosse d'avant en arrière dans un mouvement de va-et-vient pour nettoyer l'espace interdentaire entre les dents de l'utilisateur.

Le brevet EP0690685 propose une autre solution de brosse interdentale qui comprend un corps allongé ayant un axe longitudinal, un support de brosse, une brosse montée sur ce support, et une paire de jambes parallèles attachées de manière coulissante l'une à l'autre pour un mouvement relatif dans la direction de l'axe longitudinal du corps. Une connexion articulée entre le support de brosse et les jambes parallèles permet de déplacer la brosse angulairement par rapport à l'axe longitudinal du corps. Le support de brosse a une surface inférieure faisant face aux jambes parallèles et une surface supérieure opposée où est disposée la brosse, qui s'étend vers l'extérieur. Le support de brosse est une plateforme plane, et la connexion articulée comprend deux paires de charnières.

Le brevet japonais JP 3 434 275 décrit une brosse interdentaire motorisée destinée au nettoyage des espaces interdentaires par un mouvement alternatif. L'appareil comprend un corps intégrant un moteur électrique, une tête de brossage montée sur une tige, et un mécanisme de conversion transformant la rotation du moteur en un mouvement de translation oscillante de la tige. Ce mécanisme repose sur une roue dentée entraînée par le moteur, munie d'une protubérance excentrée coopérant avec un organe solidaire de la tige, percé d'un trou, afin de générer le va-et-vient de la brosse pendant l'utilisation. La roue dentée étant disposée dans un plan parallèle au plan défini par l'axe longitudinal du moteur et l'axe longitudinal de la tige.

La demande de brevet KR 2019-0001249 concerne une brosse interdentaire motorisée mettant l'accent sur une structure de connexion et de remplacement de la tête de brossage. Le dispositif comprend un corps, une tête de brossage montée sur une tige, et un mécanisme interne permettant un mouvement axial de la brosse, généralement obtenu par l'action d'un bouton ou d'un organe de commande. D2 décrit en particulier un connecteur assurant la fixation détachable de la tête et la transmission du mouvement. L'objectif principal est de faciliter l'assemblage, le remplacement de la brosse et l'ergonomie, plutôt que d'optimiser la cinématique fine de conversion rotation-translation.

### INCONVENIENTS DE L'ART ANTERIEUR

Les solutions de l'art antérieur ne sont pas totalement satisfaisantes car elles mettent en œuvre un assemblage d'un nombre important de pièces ce qui conduit à un coût élevé et une fiabilité médiocre. Accessoirement, cela rend difficile la réalisation d'un dispositif suffisamment étanche.

### OBJET DE L'INVENTION

Un but de l'invention est de proposer une brosse interdentaire obviant aux inconvénients précités. L'invention est exposée dans le jeu de revendications annexé.

### BREVE DESCRIPTION DE L'INVENTION

En vue de la réalisation de ce but, l'objet de l'invention propose une brosse interdentaire motorisée comprenant une tête de brossage pour insertion et engagement dans un espace interdentaire, prolongée par une tige, et un corps intégrant un moteur électrique commandant un mouvement vibratoire de ladite tête de brossage caractérisé en ce que
a. L'axe longitudinal A_{Lmoteur} dudit moteur électrique forme avec l'axe longitudinal AL_{tige} de ladite tige de la tête de brossage un angle compris entre 70° et 180°, et de préférence un angle de 120°±30°
b. ledit moteur électrique coopère avec ladite tête de brossage par l'intermédiaire d'un mécanisme de conversion rotation-translation comprenant :
   i. une roue dentée disposée dans un plan parallèle au plan défini par l'axe longitudinal A_{Lmoteur} et l'axe longitudinal ALtige
   ii. un joung fixé à l'extrémité distale de ladite tige présentant une fente oblongue coopérant avec une protubérance excentrée formée à la surface de ladite roue dentée
   iii. ladite roue dentée étant entraînée par un pignon fixé sur l'axe du moteur.

Selon d'autres caractéristiques avantageuses et non limitatives de l'invention, prises seules ou selon toute combinaison techniquement réalisable :
- l'axe de ladite roue dentée passe par l'intersection de l'axe longitudinal A_{Lmoteur} et de l'axe longitudinal AL_{tige}.
- le rapport de réduction entre ledit pignon et ladite roue dentée est compris entre 1/3 et 1/6.
- que ladite protubérance excentrée s'étend sur un rayon R, et en ce que la largeur de ladite fente oblongue présente une largeur est comprise entre R et 1,2.R et d'une largeur supérieure à 2R.
- ladite tige vibrante est mobile axialement et présente une chambre entouré par un joint annulaire assurant l'étanchéité avec la paroi d'une cavité tubulaire formée dans ladite tête de brossage ladite tige vibrante est mobile axialement et en ce que ledit corps présente une chambre étanchéifié par au moins un joint annulaire traversé par ladite tige vibrante.
- ledit joug est formé par une pièce moulée présentant un premier étage présentant une cavité oblongue définissant ladite fente oblongue dont le grand axe est perpendiculaire à l'axe longitudinal AL_{tige}, ledit premier étage étant surmonté par un second étage dans lequel est inséré ladite tige vibratoire, et présentant une lumière oblongue dont le grand axe est parallèle à l'axe longitudinal AL_{tige}, ladite lumière oblongue étant traversée par un prolongement de l'axe de ladite roue dentée.
- ladite tige présente à son extrémité proximal un connecteur pour recevoir une brosse présentant un segment de connexion complémentaire.

### BREVE DESCRIPTION DES FIGURES

D'autres caractéristiques et avantages de l'invention ressortiront de la description détaillée de l'invention qui va suivre en référence aux figures annexées sur lesquels :

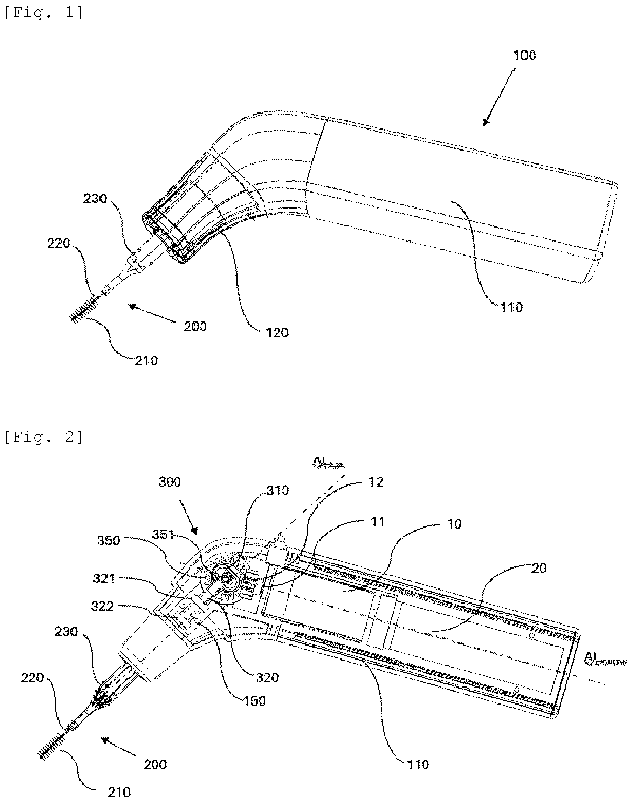

La [Fig. 1] représente une vue en perspective d'une brosse interdentaire selon l'invention ;
La [Fig. 2] représente une vue en perspective d'une brosse interdentaire sans sa coque selon l'invention ;

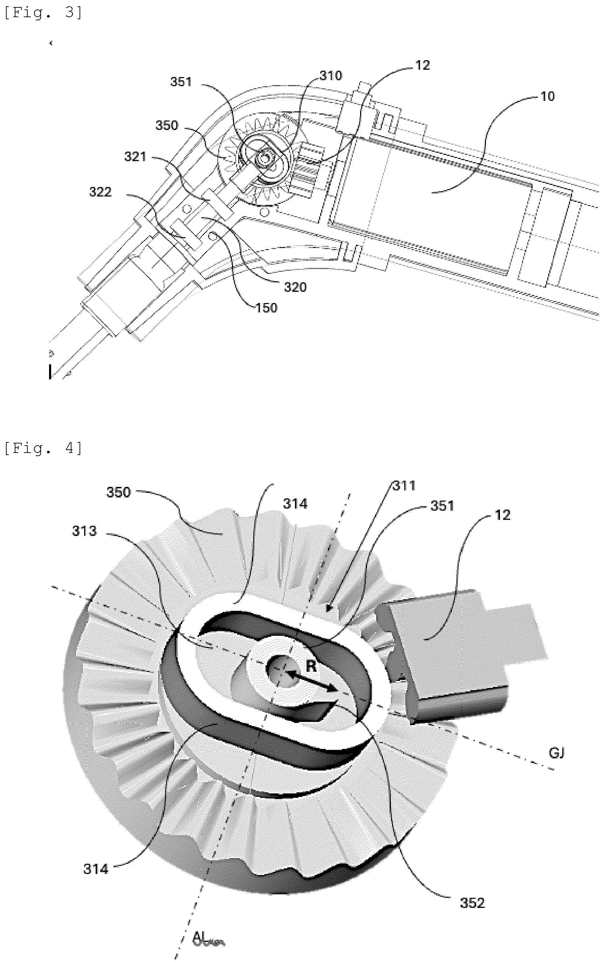

La [Fig. 3] représente une vue en perspective en détail du mécanisme de conversion rotatif-linéaire d'une brosse interdentaire sans sa coque selon l'invention ;
La [Fig. 4] représente une vue en perspective de la roue dentée et du joug d'une brosse interdentaire sans sa coque selon l'invention ;

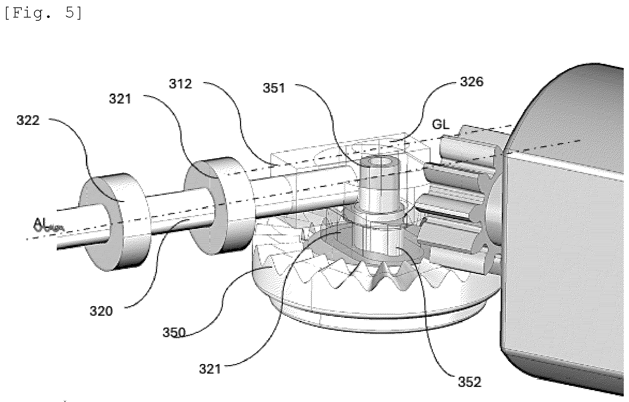

La [Fig. 5] représente une autre vue en perspective en détail du mécanisme de conversion rotatif-linéaire d'une brosse interdentaire sans sa coque selon l'invention ;

### PRINCIPE GENERAL DE L'INVENTION

La brosse interdentaire selon l'exemple de réalisation décrit nos nouveaux fronts populaires présentent une coque (100) coudée avec un manchon (110) sensiblement tubulaire et une partie incurvée (120) dans laquelle est engagée la tête de brossage (200). La tête de brossage (200) comporte une couronne de fibres (210) prolongée par une tige (220) qui dans l'exemple décrit se termine par un manchon de couplage (230) permettant d'interchanger la tête de brossage.

Le manchon tubulaire (110) contient un moteur électrique (10) et une pile ou batterie électrique (20).

Le principe de l'invention réside dans l'orientation de la tête de brossage (100) par rapport à l'axe du moteur (10), et dans le mécanisme (300) de transformation de mouvement rotatif-linéaire.

Ce mécanisme (300) est constitué par une roue dentée (350) entraînant un joug (310) lié à l'extrémité de la tige vibrante (320).

L'axe A_{Lmoteur} du moteur (110) forme un angle d'environ 120° avec l'axe AL_{tige} de la tige vibrante (320). L'axe (351) de la roue dentée (350) est perpendiculaire au plan A_{Lmoteur} / AL_{tige} et coupe ce plan à l'intersection de ces deux axes.

### DETAIL DU JOUG (310)

Le joug (310) est formé par une pièce moulée fixée à l'extrémité de la tige vibrante (320). Il présente deux étages (311, 312). Le premier étage (312) présente une cavité (313) définissant une fente oblongue dont le grand axe GJ est perpendiculaire à l'axe AL_{tige} de la tige vibrante (320).

La roue dentée (350) présente une protubérance (352) s'étendant sur un rayon R pour former un bec excentré. La largeur de la fente de la cavité (313) est égale ou légèrement supérieure à R, entre R et 1,2.R et sa longueur est supérieure à 1,1.R, par exemple 1,5.R.

La protubérance (352) est entraînée en rotation par la roue dentée (350) et son bec déplace alternativement le joug (310) en avant lorsqu'il vient en contact avec sa face avant (314), et en arrière lorsque le bec vient en contact avec sa face arrière (315). Cela occasionne un aller-retour de la tige vibrante (320) à chaque tour de la roue dentée (350).

Le deuxième étage (312) assure la liaison avec la tige vibrante (320), à une hauteur suffisante pour permettre le passage de la protubérance (352) sous la tige vibrante (320).

Ce deuxième étage (312) présente également une lumière oblongue, dont l'axe principal GL est perpendiculaire à l'axe principal GJ de la cavité (313) du joug (311), et donc parallèle à l'axe AL_{tige} de la tige vibrante (320).

### ÉTANCHÉITÉ

Un tel dispositif doit présenter un haut niveau d'étanchéité. A cet effet, l'ensemble des éléments sont enfermés dans un boîtier fermé dont la tête est traversée par la tige (320). L'étanchéité est assurée par une chambre (150) séparant la partie du corps (100) contenant les éléments électriques et mécaniques, et la partie avant traversée frontalement par la tige (320) ou par le manchon de couplage (230).

La tige vibrante (320) présente au moins un joint (321), et de préférence plusieurs joints (321, 322) en série assurant l'étanchéité par rapport à la paroi intérieure de la chambre (150). L'étanchéité se fait typiquement par compression d'un joint plat ou par déformation d'un joint torique qui remplit l'intégralité du volume disponible dans un logement prévu dans la paroi de la chambre (150).

Bien entendu l'invention n'est pas limitée au(x) mode(s) de mise en œuvre décrit(s) et on peut y apporter des variantes de réalisation sans sortir du cadre de l'invention tel que défini par les revendications.

## Revendications

1. Brosse interdentaire motorisée comprenant :
▪ une tête de brossage (200) pour insertion et engagement dans un espace interdentaire, prolongée par une tige vibrante (320), et
▪ un corps (100) intégrant un moteur électrique (10) commandant un mouvement vibratoire de ladite tête de brossage (200) tel que
a. L'axe longitudinal A_{Lmoteur} dudit moteur électrique (10) forme avec l'axe longitudinal AL_{tige} de ladite tige (320) de la tête de brossage (200) un angle compris entre 70° et 180°
b. ledit moteur électrique (10) coopère avec ladite tige (320) par l'intermédiaire d'un mécanisme de conversion rotation-translation (300) comprenant :
i. une roue dentée (350) disposée dans un plan parallèle au plan défini par l'axe longitudinal A_{Lmoteur} et l'axe longitudinal AL_{tige}
ii. un joug (310) formé par une pièce moulée présentant deux étages (311, 312) et fixé à l'extrémité distale de ladite tige vibrante (320),
iii. ledit premier étage (312) présentant une cavité (313) définissant une fente oblongue dont le grand axe GJ est perpendiculaire à l'axe AL_{tige} de ladite tige vibrante (320),
iv. ladite fente oblongue coopérant avec une protubérance excentrée (352) formée sur une surface transversale de ladite roue dentée (350)
v. ladite roue dentée (350) étant entraînée par un pignon (12) fixé sur l'axe du moteur (10)
vi. l'axe (351) de la roue dentée (350) passant par l'intersection des axes ALmoteur et ALtige..

2. Brosse interdentaire motorisée selon la revendication précédente **caractérisé en ce que** l'axe (351) de ladite roue dentée (350) passe par l'intersection de l'axe longitudinal ALₘₒₜₑᵤᵣ et de l'axe longitudinal AL_{tige}.

3. Brosse interdentaire motorisée selon la revendication 1 **caractérisé en ce que** le rapport de réduction entre ledit pignon (12) et ladite roue dentée (350) est compris entre 1/3 et 1/6.

4. Brosse interdentaire motorisée selon la revendication 1 **caractérisé en ce que** l'angle entre ledit axe longitudinal ALₘₒₜₑᵤᵣ dudit moteur électrique (10) et l'axe longitudinal AL_{tige} de ladite tige (320) de la tête de brossage (200) est de 120°±30°.

5. Brosse interdentaire motorisée selon la revendication précédente **caractérisé en ce que** ladite tige vibrante (320) est mobile axialement et **en ce que** ledit corps (100) présente une chambre (150) étanchéifié par au moins un joint annulaire (321, 322) traversé par ladite tige vibrante (320).

6. Brosse interdentaire motorisée selon la revendication 1 **caractérisé en ce que** ledit premier étage étant surmonté par un second étage dans lequel est inséré ladite tige vibratoire, et présentant une lumière oblongue (326) dont le grand axe GL est parallèle à l'axe longitudinal AL_{tige}, ladite lumière oblongue étant traversée par un prolongement de l'axe de ladite roue dentée.

7. Brosse interdentaire motorisée selon la revendication 1 **caractérisé en ce que** ladite tige présente à son extrémité proximal un connecteur pour recevoir une brosse présentant un segment de connexion complémentaire.

## Patentansprüche

1. Motorisierte Interdentalbürste, umfassend:
▪ einen Bürstenkopf (200) zum Einführen und Eingreifen in einen Zahnzwischenraum, der durch einen vibrierenden Schaft (320) verlängert ist, und
▪ einen Körper (100), der einen Elektromotor (10) integriert, der eine Vibrationsbewegung des Bürstenkopfes (200) derart steuert, dass
a. die Längsachse AL_{Motor} des Elektromotors (10) mit der Längsachse AL_{Schaft} des Schafts (320) des Bürstenkopfs (200) einen Winkel zwischen 70° und 180° ausbildet
b. der Elektromotor (10) mit dem Schaft (320) über einen Rotations-Translations-Umwandlungsmechanismus (300) zusammenwirkt, umfassend:
i. ein Zahnrad (350), das in einer Ebene parallel zu der durch die Längsachse AL_{Motor} und die Längsachse AL_{Schaft} definierten Ebene angeordnet ist
ii. ein Joch (310), das durch ein Formteil ausgebildet ist, das ein zwei Stufen (311, 312) aufweist, und an dem distalen Ende des vibrierenden Schafts (320) befestigt ist,
iii. die erste Stufe (312), die einen Hohlraum (313) aufweist, der einen länglichen Schlitz definiert, dessen Hauptachse GJ senkrecht zu der Achse AL_{Schaft} des vibrierenden Schafts (320) verläuft,
iv. den länglichen Schlitz, der mit einem exzentrischen Vorsprung (352) zusammenwirkt, der auf einer Queroberfläche des Zahnrads (350) ausgebildet ist
v. das Zahnrad (350), das durch ein auf der Achse des Motors (10) befestigtes Ritzel (12) angetrieben wird
vi. die Achse (351) des Zahnrads (350), die durch den Schnittpunkt der Achsen ALMotor und ALSchaft verläuft.

2. Motorisierte Interdentalbürste nach dem vorstehenden Anspruch,
**dadurch gekennzeichnet, dass** die Achse (351) des Zahnrads (350) durch den Schnittpunkt der Längsachse AL_{Motor} und der Längsachse AL_{Schaft} verläuft.

3. Motorisierte Interdentalbürste nach Anspruch 1,
**dadurch gekennzeichnet, dass** das Untersetzungsverhältnis zwischen dem Ritzel (12) und dem Zahnrad (350) zwischen 1/3 und 1/6 liegt.

4. Motorisierte Interdentalbürste nach Anspruch 1,
**dadurch gekennzeichnet, dass** der Winkel zwischen der Längsachse AL_{Motor} des Elektromotors (10) und der Längsachse AL_{Schaft} des Schafts (320) des Bürstenkopfes (200) 120°±30° beträgt.

5. Motorisierte Interdentalbürste nach dem vorstehenden Anspruch,
**dadurch gekennzeichnet, dass** der vibrierende Schaft (320) axial beweglich ist und dass der Körper (100) eine Kammer (150) aufweist, die durch mindestens eine Ringdichtung (321, 322) abgedichtet ist, die durch den vibrierenden Schaft (320) durchquert wird.

6. Motorisierte Interdentalbürste nach Anspruch 1,
**dadurch gekennzeichnet, dass** die erste Stufe von einer zweiten Stufe überragt wird, in die der vibrierende Schaft eingeführt ist, und ein längliches Loch (326) aufweist, dessen Hauptachse GL parallel zu der Längsachse AL_{Schaft} verläuft, wobei das längliche Loch durch eine Verlängerung der Achse des Zahnrads durchquert wird.

7. Motorisierte Interdentalbürste nach Anspruch 1,
**dadurch gekennzeichnet, dass** der Schaft an seinem proximalen Ende einen Verbinder zum Aufnehmen einer Bürste mit einem komplementären Verbindungssegment aufweist.

## Claims

1. Motor-driven interdental brush, comprising:
▪ a brushing head (200) intended for insertion into and engagement in an interdental space and extended by a vibrating rod (320), and
▪ a body (100) incorporating an electric motor (10) which controls said brushing head (200) to vibrate, such that
a. the longitudinal axis AL_{Motor} of said electric motor (10) forms an angle of between 70° and 180° with the longitudinal axis AL_{rod} of said rod (320) of the brushing head (200)
b. said electric motor (10) interacts with said rod (320) via a rotation-to-translation conversion mechanism (300) comprising:
i. a gearwheel (350) arranged in a plane parallel to the plane defined by the longitudinal axis AL_{Motor} and the longitudinal axis AL_{rod}
ii. a yoke (310) which is formed by a molded part having two stages (311, 312) and is attached to the distal end of said vibrating rod (320),
iii. said first stage (312) having a cavity (313) which defines an oblong slot of which the major axis GJ is perpendicular to the axis AL_{rod} of said vibrating rod (320),
iv. said oblong slot cooperating with an eccentric protrusion (352) formed on a transverse surface of said gearwheel (350)
v. said gearwheel (350) being driven by a pinion (12) attached to the shaft of the motor (10)
vi. the shaft (351) of the gearwheel (350) passing through the intersection of the axes ALmotor and ALrod.

2. Motor-driven interdental brush according to the preceding claim, **characterized in that** the shaft (351) of said gearwheel (350) passes through the intersection of the longitudinal axis AL_{Motor} and the longitudinal axis AL_{rod}.

3. Motor-driven interdental brush according to claim 1, **characterized in that** the reduction ratio between said pinion (12) and said gearwheel (350) is between 1/3 and 1/6.

4. Motor-driven interdental brush according to claim 1, **characterized in that** the angle between said longitudinal axis AL_{Motor} of said electric motor (10) and the longitudinal axis AL_{rod} of said rod (320) of the brushing head (200) is 120° ± 30°.

5. Motor-driven interdental brush according to the preceding claim, **characterized in that** said vibrating rod (320) is axially movable and **in that** said body (100) has a chamber (150) sealed by at least one annular seal (321, 322) through which said vibrating rod (320) passes.

6. Motor-driven interdental brush according to claim 1, **characterized in that** said first stage is surmounted by a second stage into which said vibratory rod is inserted, and has an oblong window (326) of which the major axis GL is parallel to the longitudinal axis AL_{rod}, an extension of the shaft of said gearwheel passing through said oblong window.

7. Motor-driven interdental brush according to claim 1, **characterized in that** said rod has at its proximal end a connector for receiving a brush having a complementary connection segment.
